# EUROPEAN PATENT APPLICATION

(11) **EP 4 083 150 A1**
(43) Date of publication of application: **02.11.2022**
(21) Application number: 20907215.6
(22) Date of filing: 21.12.2020
(51) Int. Cl.: C09D 11/38, B41M 5/00

(54) **AQUEOUS INKJET PRINTING INK COMPOSITION**

(30) Priority: 27.12.2019 JP 2019238032
(71) Applicant: Sakata INX Corporation, Osaka-shi, Osaka 550-0002 (JP)
(72) Inventor: NAKASHIMA, Okinori, Osaka-shi, Osaka 550-0002 (JP); KINJOH, Jun, Osaka-shi, Osaka 550-0002 (JP); SHIOZAKI, Daigo, Osaka-shi, Osaka 550-0002 (JP)
(74) Representative: Grünecker Patent- und Rechtsanwälte PartG mbB
(86) International application number: PCT/JP2020/047740
(87) International publication number: WO 2021/132179

(57) **Abstract**

An object is to obtain an ink composition that can be cured by specific radiation rays and does not change color of the ink composition as an aqueous inkjet printing ink composition. As a solution, provided is an aqueous inkjet printing ink composition that is cured by the following radiation rays (1) comprising: an acylphosphine oxide-based compound as a photopolymerization initiator of 3 to 10% by mass; a monofunctional water-soluble monomer of 30 to 50% by mass; a multifunctional water-soluble monomer of 10 to 30% by mass; and a pigment based on the whole ink composition.
The radiation rays (1) Radiation rays that contain a wavelength of 800 nm and a wavelength of 385 nm and have an irradiation intensity of 100 mW/cm² or less at a wavelength of 385 nm.

## Description

### Technical Field

The present invention relates to an aqueous inkjet printing ink composition that is cured by specific radiation rays.

### Background Art

As described in Patent Literature 1, a UV-curable aqueous inkjet printing ink composition comprising a water-soluble high molecular compound and a water-soluble compound having an ethylenic unsaturated bond has been known.

Such a UV-curable aqueous inkjet printing ink composition contains a photopolymerization initiator. The photopolymerization initiator used in this case may discolor, which consequently may impair color tones especially when a cyan ink or a yellow ink is used.

Patent Literature 2 describes a near-infrared curing composition such as an ink containing phosphonic copper salt but there is a concern about coloring derived from free copper.

### Background Art Literature

### Patent Literature

Patent Literature 1: Japanese Patent Publication 2011-195737
Patent Literature 2: Japanese Patent Publication 2015-131928

### Summary of the Invention

### Problems to Be Solved by the Invention

An object of the present invention is to obtain, as an aqueous inkjet printing ink composition, an aqueous inkjet printing ink composition that can be cured also by specific radiation rays such as ultraviolet rays, inhibits discoloration of an ink composition due to an infrared-absorbing agent or the like, is an aqueous ink composition, and has sufficiently high curability.

### Means for Solving the Problems

After studying in earnest to achieve the aforementioned object, the inventors of the present invention completed the present invention as an aqueous inkjet printing ink composition containing a specific photopolymerization initiator.

Namely the present invention is:
1. An aqueous inkjet printing ink composition that is cured by the following radiation rays (1) comprising:
   an acylphosphine oxide-based compound as a photopolymerization initiator of 3 to 10% by mass;
   a monofunctional water-soluble monomer of 30 to 50% by mass;
   a multifunctional water-soluble monomer of 10 to 30% by mass; and
   a pigment based on the whole ink composition.
   The radiation rays (1)
   Radiation rays that contain a wavelength of 800 nm and a wavelength of 385 nm and have an irradiation intensity of 100 mW/cm² or less at a wavelength of 385 nm.
2. A printing method comprising: printing an aqueous inkjet printing ink composition comprising an acylphosphine oxide-based compound of 3 to 10 percent by mass as a photopolymerization initiator, a monofunctional water-soluble monomer of 30 to 50% by mass, a multifunctional water-soluble monomer of 10 to 30% by mass, and a pigment, based on the whole ink composition; and
   then curing the resulting composition using the following radiation (1).
   The radiation rays (1)
   Radiation rays that contain a wavelength of 800 nm and a wavelength of 385 nm and have an irradiation intensity of 100 mW/cm² or less at a wavelength of 385 nm.

### Effects of the Invention

The present invention is an invention that can produce a remarkable effect, namely obtaining an aqueous inkjet printing ink composition which can be cured by specific radiation rays, and is aqueous, and can inhibit discoloration due to an infrared-absorbing agent or the like, and has excellent curability, solid filling property, and excellent anti-mottling property.

### Mode for Carrying Out the Invention

An aqueous inkjet printing ink composition of the present invention (hereinafter also referred to as an "ink composition of the present invention") will be hereinafter explained in detail.

### [Acylphosphine oxide-based compound]

An acylphosphine oxide-based compound of the present invention is water-soluble and is required to cause no change in color development of the ink composition.

As such an acylphosphine oxide-based compound, TPO-L (2,4,6-trimethylbenzoyl phenylphosphinic acid ethyl ester) or the like is preferably employed.

Employing such an acylphosphine oxide-based compound enables manifesting an excellent effect, namely obtaining an aqueous inkjet printing ink composition capable of manifesting sufficient radiation curability, and at the same time, causing no change in color development of the ink composition.

The content of the acylphosphine oxide-based compound based on the whole ink composition is 3 to 10% by mass, preferably 3 to 8% by mass, or more preferably 4 to 6% by mass.

Also, the content of the acylphosphine oxide-based compound in the aqueous inkjet printing ink composition of the present invention is preferably 6 to 12 parts by mass, or more preferably 7 to 11 parts by mass, with respect to 100 parts by mass of the sum of polymerization compound.

If the content is less than 6 parts by mass relative to the whole ink composition, solid filling property and anti-mottling property, and radiation curability may not be produced sufficiently, and if the content exceeds 12 parts by mass, storage stability of the ink composition of the present invention may be degraded.

### [Monofunctional water-soluble monomer]

As a monofunctional water-soluble monomer, any radical polymerizable monomer can be used, such as (meth)acrylic acid, acryloyl morpholine, N-vinylformamide, [3-(methacryloylamino)propyl]dimethyl(3-sulfobutyl)ammonium, 2-ethylhexyl-diglycol (meth)acrylate, 2-hydroxybutyl (meth)acrylate, ethoxydiethylene glycol (meth)acrylate, methoxy diethylene glycol (meth)acrylate, methoxypolyethylene glycol (meth)acrylate, methoxypropylene glycol (meth)acrylate, polyethylene glycol mono (meth)acrylate, polypropylene glycol mono (meth)acrylate, 2-hydroxyethyl (meth)acrylate, 2-hydroxypropyl(meth)acrylate, 4-hydroxybutyl(meth)acrylate, dimethylaminoethyl(meth)acrylate, diethylaminoethyl(meth)acrylate, dipropylaminoethyl(meth)acrylate, diisopropylaminoethyl(meth)acrylate, dibutylaminoethyl (meth)acrylate, diisobutylaminoethyl (meth)acrylate, di-t-butylaminoethyl (meth)acrylate, ethyl (meth) acrylamide, isopropyl(meth)acrylamide, butyl (meth) acrylamide, dimethylaminopropyl (meth) acrylamide, diethylaminopropyl (meth) acrylamide, dipropylaminopropyl (meth) acrylamide, diisopropylaminopropyl (meth) acrylamide, dibutylaminopropyl (meth) acrylamide, diisobutylaminopropyl (meth) acrylamide, di-t-butylaminopropyl (meth)acrylamide, N,N'-dimethyl(meth)acrylamide, N, N'-diethyl(meth)acrylamide, hydroxyethylacrylamide, hydroxypropylacrylamide, hydroxybutylacrylamide, dimethylaminostyrene, dimethylaminomethylstyrene, and the like.

Vinylpiridines include 4-vinylpyridine, 2-vinylpyridine, or the like. N-vinyl heterocyclic compounds include N-vinyl imidazole or the like. Vinyl ethers include aminoethyl vinyl ether, dimethylaminoethyl vinyl ether, (meth)acryloyloxyethyl trimethylammonium chloride, (meth)acryloyloxyethyl triethyl ammonium chloride, (meth)acryloyloxyethyl dimethyl benzyl ammonium chloride, (meth)acryloyloxy propyl trimethylammonium chloride, (meth)acryloyloxy butyltrimethylammonium chloride, or the like. Among these, (meth) acryloyloxyethyltrialkyl (methyl or ethyl) ammonium salt and (meth) acryloyloxypropyltrialkyl (methyl or ethyl) ammonium salt are preferable, which are (meth) acryloyloxyethyltrimethylammonium chloride, (meth) acryloyloxypropyltrimethylammonium chloride, 3-(acryloylamino)propyltrimethylammonium chloride, or the like.

Particularly, it is preferable that acryloylmorpholine and 4-hydroxybutyl acrylate are contained.

The monofunctional water-soluble monomer is blended so that the content thereof is 30 to 50% by mass, more preferably 35 to 45% by mass, or yet more preferably 37 to 43% by mass based on the whole ink composition.

Acryloylmorpholine in amounts of more preferably 20 to 30% by mass, or yet more preferably 24 to 27% by mass based on the whole ink composition is contained.

Also, 4-hydroxybutyl acrylate in amounts of more preferably 5 to 25% by mass, or yet more preferably 8 to 17% by mass is contained.

The monofunctional water-soluble monomer is blended so that the content is 30 to 75 parts by mass, preferably 40 to 70 parts by mass, or more preferably 50 to 68 parts by mass, with respect to 100 parts by mass of the whole polymerizable compound in the ink composition.

### [Polyfunctional water-soluble monomer]

Polyfunctional water-soluble monomers include ethylene oxide modified pentaerythritol tetraacrylate, ethylene oxide modified trimethylolpropane triacrylate, polyethylene glycol di (meth) acrylate such as triethylene glycol di (meth) acrylate, tetraethylene glycol di (meth) acrylate, polypropylene glycol di (meth) acrylate such as tripropylene glycol di (meth) acrylate, EO (ethylene oxide) adduct of bisphenol A di (meth) acrylate, PO of bisphenol A (propylene oxide) adduct di (meth) acrylate, hydroxypivalic acid neopentyl glycol di (meth) acrylate, and polytetramethylene glycol di (meth) acrylate, propylene oxide modified trimethylolpropane tri (meth) acrylate, glyceroltri (meth) acrylate, glycerin ethoxy tri (meth) acrylate, glycerin propoxy tri(meth)acrylate, and the like.

The polyfunctional water-soluble monomer is blended so that the content thereof is 10 to 30% by mass, preferably 13 to 25% by mass, or more preferably 15 to 23% by mass, based on the whole ink composition.

Particularly, the ethylene oxide modified pentaerythritol tetraacrylate and ethylene oxide modified trimethylolpropane triacrylate in amounts of preferably 5.0 to 20.0% by mass, or more preferably 8 to 15% by mass, are each independently contained in the ink composition.

The polyfunctional water-soluble monomer is blended so that the content thereof is 25 to 50 parts by mass, preferably 30 to 40 parts by mass, or more preferably 32 to 38 parts by mass, with respect to 100 parts by mass of the whole polymerizable compound in the ink composition.

### <Aqueous medium>

An aqueous inkjet printing ink composition may contain an aqueous solvent as needed. The aqueous solvent consists of water as the basic component, and, as needed, may be used with other aqueous solvents such as lower alcohols such as methanol, ethanol, n-propyl alcohol, isopropyl alcohol, and glycols such as ethylene glycol, diethylene glycol, triethylene glycol, tetraethylene glycol, propylene glycol, dipropylene glycol.

The aqueous solvent is blended so that the content thereof is 10 to 50% by mass, or preferably 20 to 40% by mass, with respect to the whole ink composition.

### <Extender pigment>

An extender pigments may be blended in the present invention. Such extender pigments include silica, aluminum oxide, calcium carbonate, or the like.

When blending such extender pigments, the content thereof in the ink composition is 0.1 to 10% by mass, preferably 0.5 to 7.0% by mass, or yet more preferably 0.7 to 5.0% by mass.

### <Non-polymerizable resin>

In addition, polyurethane-based resins, acrylic-based resins, styrene-acrylic-based resins, cellulose-based resins, and polyvinyl alcohol-based resins, or the like can be used together as non-polymerizable resins. The above-mentioned non-polymerizable resins may be used alone, or as needed, in a combination of two or more.

### <Colorant >

An aqueous inkjet printing ink composition having each color can be obtained by including a colorant having each hue in the aqueous inkjet printing ink composition of the present invention.

For such colorants, conventionally used pigments or dyes in usual ink compositions for photocurable inkjet printing may be used without any special limitation, but considering lightfastness, pigments such as organic pigments or inorganic pigments are preferable.

Also, since a photopolymerization initiator is not colored in the present invention, even if blended in ink compositions having colors such as yellow or blue whose color development is easily affected by other colorants, or colors such as light cyan, light magenta having high intensity, the photopolymerization initiator does not discolor their respective ink compositions.

Examples of organic color pigments include dye lake pigments, azo-based, benzimidazolone-based, phthalocyanine-based, quinacridone-based, anthraquinone-based, dioxazine-based, indigo-based, thioindigo-based, perylene-based, perinone-based, diketopyrrolopyrrole-based, isoindolinone-based, nitro-based, nitroso-based, flavanthrone-based, quinophthalone-based, pyranthrone-based, and indanthrone-based pigments, etc. Inorganic color pigments include carbon black, titanium oxide, red iron oxide, graphite, iron black, chrome oxide green, and the like.

Specific examples of pigments for each typical hue used in the aqueous inkjet printing ink composition of the present invention are listed below.

Firstly, examples of yellow pigments used as yellow ink compositions for aqueous inkjet printing are C.I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, 213, and the like, and preferably C.I. Pigment Yellow150, 155, 180, 213.

Examples of magenta pigments used as magenta ink compositions for aqueous inkjet printing are C.I. Pigment Red 5, 7, 12, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, 270, C.I. Pigment Violet 19, and the like, and preferably C.I. Pigment Red 122, 202, C.I. Pigment Violet 19.

Examples of cyan pigments used as cyan ink compositions for aqueous inkjet printing include C.I. Pigment Blue 1, 2, 3, 15, 15:1, 15:2, 15:3, 15:4, 15:6, 16, 18, 22, 27, 29, 60, and the like, and preferably C.I. Pigment Blue 15:3, 15:4.

Examples of black pigments used as black ink compositions for aqueous inkjet printing include carbon black (C. I. Pigment Black 7).

Examples of white pigments used as white ink compositions for aqueous inkjet printing are titanium oxide or aluminum oxide, and preferably titanium oxide surface-treated with various materials such as alumina, silica.

The content of the colorant in the aqueous inkjet printing ink composition of the present invention is preferably 1 to 20% by mass relative to the total amount of the aqueous inkjet printing ink composition. If the content of the colorant is less than 1 % by mass, the image quality of the resulting printed material tends to deteriorate. On the other hand, content exceeding 20% by mass tends to adversely affect viscometric property of the aqueous inkjet printing ink composition.

### <Inorganic particle dispersant>

Also, the aqueous inkjet printing ink composition of the present invention may contain the inorganic particle dispersant which is a dispersant for an extender pigment or an inorganic colorant as needed.

The inorganic particle dispersants are used to improve the dispersibility of inorganic particles and the storage stability of the ink composition of the present invention, and those that have been used as pigment dispersants may be used without any special limitation, and particularly, using a polymeric dispersant is preferable. Such inorganic particle dispersants include carbodiimide-based dispersants, polyesteramine-based dispersants, fatty acid amine-based dispersants, modified polyacrylate-based dispersants, modified polyurethane-based dispersants, multi-chain polymer nonionic-based dispersants, polymer ion activators, and the like. These inorganic particle dispersants may be used alone or in a combination of two or more.

The above-mentioned inorganic particle dispersant is contained in amounts of preferably 1 to 200 parts by mass when the total amount of the pigment used is 100 parts by mass. If the content of the pigment dispersant is less than 1 part by mass, the inorganic particle dispersibility, and the storage stability of the ink composition of the present invention may deteriorate. On the other hand, although the content thereof can exceed 200 parts by mass, there may be no difference in the effect. The more preferable lower limit of the content of the inorganic particle dispersant is 5 parts by mass and the more preferrable upper limit thereof is 60 parts by mass.

### <Surfactant>

In order to improve discharge stability, depending on an inkjet head used, the aqueous inkjet printing ink composition of the present invention preferably contains a surfactant such as a silicone-based surfactant that has been used in an ink composition for photocurable inkjet printing as a surfactant.

Specific examples of silicone surfactants include polyether-modified silicone oil, polyester-modified polydimethylsiloxane, polyester-modified methyl alkyl polysiloxane (BYK -315N), and the like. They may be used alone, or in a combination of two or more.

The content of the surfactant in the ink composition of the present invention is preferably 0.005 to 1.0% by mass. If the content is less than 0.005% by mass, the surface tension of the aqueous inkjet printing ink composition of the present invention becomes high, and the discharge stability of the aqueous inkjet printing ink composition from the inkjet head decreases. On the other hand, if the content exceeds 1.0% by mass, bubbles increase in the ink composition and the discharge stability decreases.

### <Additives>

In order to express various functionalities as needed, various additives may be added to the aqueous inkjet printing ink composition of the present invention to the extent that the effects of the present invention are not impaired. Specifically, the additives include silicone-based leveling agents, light stabilizers, surface treatment agents, antioxidants, antiaging agents, crosslinking promoter, polymerization inhibitors such as quinone-based, plasticizers such as dioctyl maleate, preservatives, pH adjusting agent, defoaming agents, humectant, and the like.

Also, the aqueous inkjet printing ink composition of the present invention may contain a solvent but preferably contains no solvent. In the case of a non-solvent, the viscosity at 25°C is preferably 100 cps or less, more preferably 20 cps or less, still more preferably 10 cps or less. Furthermore, the concrete viscosity of the aqueous inkjet printing ink composition may be designed to be applicable to each inkjet printing device.

The aqueous inkjet printing ink composition of the present invention can be structured to have excellent curability to specific radiation rays, and inhibit discoloration due to an infrared-absorbing agent or the like, and have excellent curability and solid filling property, and excellent anti-mottling property by containing a specific amount of the above-mentioned specific acylphosphine-based oxide photopolymerization initiator.

A method of preparing the aqueous inkjet printing ink composition of the present invention is not especially limited, and it may be prepared by adding all of the above-mentioned materials and mixing them using a bead mill, a 3-roll mill, or the like.

It should be noted that it may be also prepared by mixing a pigment, a pigment dispersant, and a photopolymerizable component, in order to obtain a conc-based ink composition in advance, and adding additives such as a photopolymerizable component, a photopolymerization initiator and, as needed, a surfactant to the conch-based ink composition so that the composition of the aqueous inkjet printing ink composition is desirable.

When implementing a method of using the aqueous inkjet printing ink composition of the present invention, specifically, an ink of the present invention may be used to be printed on coated paper or uncoated paper, and also used for resin films or materials on metal surfaces instead of the coated paper, and the like.

Printing methods include a method of discharging the aqueous inkjet printing ink composition of the present invention onto the surfaces of these materials using an inkjet head, and then irradiating a coating film of the aqueous inkjet printing ink composition which landed on the base material with radiation rays (1) (having a wavelength of 800 nm and a wavelength of 385 nm, and an irradiation intensity at a wavelength of 385 nm is 100 mW/cm² or less), and curing the resulting coating film.

Specifically, the discharge (image printing) onto the base material can be performed by supplying the aqueous inkjet printing ink composition of the present invention to a low-viscosity compatible printer head of a printer for an inkjet recording system, and discharging the ink composition from the printer head so that the film thickness of the coating film relative to the base material is, for example, 1 to 60 µm.

The aqueous inkjet printing ink composition of the present invention can be used in conventionally used printer devices of inkjet recording system. It should be noted that when a continuous-type inkjet recording system printer device is used, it is preferable that a conductivity-adding agent is further added to the aqueous inkjet printing ink composition of the present invention to adjust the conductivity.

The aqueous inkjet printing ink composition of the present invention is printed and photocured on a base material surface, which can form a layer for printing any information.

### (Examples)

Preparation of the aqueous inkjet printing ink composition

The present invention will be explained in greater detail below using examples; however, the present invention is not limited to these examples. It should be noted that, unless otherwise specified, "%" means "percent by mass", while "part(s)" means "part(s) by mass".

The blending amounts of the aqueous inkjet printing ink composition used in an example and comparative examples will be described in Table 1.

The materials used in the example and the comparative examples below are as follows.
BYK-333 : Silicone-based surfactant (produced by BYK Japan KK)
PB15:3 : Pigment Blue 15:3
Solsperse 32000 (produced by The Lubrizol Corporation)

### Printing methods in Example and Comparative Examples

Solid printing was performed on PET film using inks listed in Table 1 on an inkjet printing system. A solid printing area that was being conveyed at 100 m/min was irradiated with radiation rays using light sources listed in Table 2 at a distance of 10 mm so that irradiation intensities are as listed in Table 2.

**[Table 1]**

| | | | ink 1 | ink 2 |
|---|---|---|---|---|
| monofunctional water-soluble monomer | | acryloylmorpholine | 25.76 | 25.76 |
| | | 4-hydroxybutyl acrylate | 15.00 | 15.00 |
| multifunctional water-soluble monomer | | EO-modified pentaerythritol tetraacrylate | 10.00 | 10.00 |
| | | EO-modified trimethylolpropane triacrylate | 10.00 | 10.00 |
| water 31.80 36.80 | | | | |
| Initiator (infrared-absorbing agent) | TPO-L | 2,4,6-trimethylbenzoyl phenylphosphinic acid ethyl ester | 5.00 | |
| Silicone-based leveling agent | BYK-333 | polyether-modified polydimethyl siloxane | 0.20 | 0.20 |
| dispersant | | Solsperse 32000 | 0.64 | 0.64 |
| pigment | | PB15:3 | 1.60 | 1.60 |
| total | | | 100.00 | 100.00 |

**[Table 2]**

| | | | |
|---|---|---|---|
| light source | 800 nm | 385 nm | Irradiation intensity at 385 nm |
| NIR halogen | ○ | ○ | 80 mW/cm² |
| NIR-LED | ○ | × | - |
| UV-LED | × | ○ | 2000 mW/cm² |

### (Evaluation method)

Cured coating films in the example and the comparative examples made with the ink and light source combinations listed in Table 3 were evaluated according to the following evaluation methods.

### <Curability>

The cured coating films in the example and the comparative examples were rubbed with cotton swabs, and color on the surfaces of the cotton swabs were visually evaluated.
○ : No color on the cotton swab
× : Color on the cotton swab

### <Solid filling property >

The coating films in the example and the comparative examples were visually evaluated.
○ : A solid was clearly formed.
△ : Streaks were visible in part.
× : Many streaks were seen.

### <Mottling (uneven printing density on printed surface)>

Coated films in the example and the comparative examples were visually evaluated.
○ : No uneven density
× : Uneven density

**[Table 3]**

| | Example 1 | Comparative Example 1 | Comparative Example 2 | Comparative Example 3 |
|---|---|---|---|---|
| ink | Ink 1 | Ink 2 | Ink 1 | Ink 1 |
| light source | NIR halogen | NIR halogen | NIR-LED | UV-LED |
| curability | ○ | × | × | ○ |
| solid filling property | ○ | - | - | △ |
| mottling | ○ | - | - | × |

In Example 1, even with the lower irradiation intensity, the coating film was sufficiently cured, with excellent solid filling property, and excellent anti-mottling property.

In Comparative Example 1 in which an initiator was not blended, the coating film was not cured sufficiently, and the solid filling property as well as anti-mottling property could not be confirmed.

In contrast to Example 1, Comparative Example 2 in which an infrared-emitting LED that does not emit ultraviolet rays was employed as the light source, also produced the same results as Comparative Example 1.

In contrast to Example 1, Comparative Example 3 in which an LED for ultraviolet radiation that does not emit infrared rays was employed as the light source, produced results that the coating film was cured quickly with excellent curability but with insufficient solid filling property, and there was no evaporation of water as a solvent by heat, and the anti-mottling property was poor.

The above-mentioned results show that even ink that can be cured by ultraviolet rays cannot attain further sufficient solid filling property and anti-mottling property unless the radiation rays containing both wavelengths in the UV region and the near-infrared region are used.

## Claims

1. An aqueous inkjet printing ink composition that is cured by the following radiation rays (1), comprising:
an acylphosphine oxide-based compound as a photopolymerization initiator of 3 to 10% by mass;
a monofunctional water-soluble monomer of 30 to 50% by mass;
a multifunctional water-soluble monomer of 10 to 30% by mass; and
a pigment based on the whole ink composition.
The radiation rays (1)
Radiation rays that contain a wavelength of 800 nm and a wavelength of 385 nm and have an irradiation intensity of 100 mW/cm² or less at a wavelength of 385 nm.

2. A printing method comprising: printing an aqueous inkjet printing ink
composition comprising an acylphosphine oxide-based compound of 3 to 10% by mass as a photopolymerization initiator, a monofunctional water-soluble monomer of 30 to 50% by mass, a multifunctional water-soluble monomer of 10 to 30% by mass, and a pigment based on the whole ink composition; and then curing the resulting composition using the following radiation rays (1).
The radiation rays (1)
Radiation rays that contain a wavelength of 800 nm and a wavelength of 385 nm and have an irradiation intensity of 100 mW/cm² or less at a wavelength of 385 nm.
